(19) Europäisches Patentamt
European Patent Office
Office européen des brevets

(11) **EP 2 486 638 B1**

(12) **FASCICULE DE BREVET EUROPEEN**

(45) Date de publication et mention de la délivrance du brevet:
**04.11.2015  Bulletin 2015/45**

(51) Int Cl.:
**H02H 6/00** *(2006.01)*    **H02H 9/00** *(2006.01)*

(21) Numéro de dépôt: **10763779.5**

(22) Date de dépôt: **31.08.2010**

(86) Numéro de dépôt international:
**PCT/FR2010/051805**

(87) Numéro de publication internationale:
**WO 2011/042631 (14.04.2011 Gazette 2011/15)**

(54) **PROCEDE D'ESTIMATION EN TEMPS REEL DE LA TEMPERATURE DU STATOR ET DU ROTOR D'UNE MACHINE ELECTRIQUE TOURNANTE**

VERFAHREN ZUR ECHTZEITSCHÄTZUNG DER TEMPERATUR EINES STATORS UND ROTORS BEI EINER ELEKTRISCHEN DREHMASCHINE

METHOD FOR THE REAL TIME ESTIMATION TEMPERATURE OF A STATOR AND A ROTOR IN A ROTATING ELECTRICAL MACHINE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **06.10.2009   FR 0956957**

(43) Date de publication de la demande:
**15.08.2012   Bulletin 2012/33**

(73) Titulaire: **Valeo Embrayages**
**80009 Amiens Cedex 2 (FR)**

(72) Inventeurs:
• **KRAEMER, Philippe**
**F-80080 Amiens (FR)**

• **MAUREL, Pascal**
**F-75009 Paris (FR)**

(74) Mandataire: **Cardon, Nicolas et al**
**Valeo Transmissions**
**Sce Propriété Intellectuelle**
**14 Avenue des Beguines**
**95892 Cergy Pontoise Cedex (FR)**

(56) Documents cités:
**EP-A1- 2 083 493        DE-A1- 19 948 715**
**FR-A1- 2 896 354        US-A- 5 525 881**
**US-A1- 2006 250 154**

**Description**

L'invention se rapporte à un procédé d'estimation en temps réel de la température des éléments d'une machine électrique tournante équipant un véhicule automobile.

L'invention se rapporte plus particulièrement à un procédé d'estimation en temps réel de la température d'un stator et d'un rotor d'une machine électrique tournante, notamment pour équiper un véhicule automobile, le procédé étant destiné à être mis en oeuvre par un calculateur numérique,
la machine électrique tournante comportant au moins les composants suivants :

- un stator fixe ;
- un rotor rotatif ;
- le stator et/ou le rotor portant au moins un bobinage de conducteurs électriques associé qui est destiné à être traversé par un courant électrique ;
les températures du stator et du rotor étant estimées par le calculateur numérique lors d'itérations du procédé par la résolution d'au moins une équation, faisant intervenir
- des résistances thermiques entre le stator et des milieux voisins ;
- des résistances thermiques entre le rotor et des milieux voisins ;
- la capacité calorifique du stator ;
- la capacité calorifique du rotor.

Dans les véhicules équipés d'un dispositif d'embrayage à friction, la transmission du couple fourni par l'arbre moteur jusqu'à l'arbre d'entrée de boîte de vitesses est réalisée par le serrage d'un disque de friction entre deux plateaux.

Le serrage des plateaux est commandé par un actionneur qui est mu par une machine électrique tournante, telle qu'un moteur électrique synchrone ou asynchrone. C'est notamment le cas lorsque la commande du dispositif d'embrayage à friction est automatisée, par exemple dans les véhicules automobiles équipés d'une boîte de vitesses robotisée. Un exemple d'un tel actionneur est décrit en détail dans le document FR-A1-2.721.264.

Lors d'un usage intensif du dispositif d'embrayage à friction, par exemple en cas de succession rapide de débrayage et d'embrayage sur une longue durée, le passage répété ou continu du courant électrique dans les bobinages de la machine électrique tournante est susceptible d'élever très sensiblement la température du stator et du rotor.

Cet échauffement important est susceptible de perturber le fonctionnement de l'actionneur, voire de l'endommager.

Pour éviter ces inconvénients, il est connu, notamment par le document FR-A1-2.526.599, d'estimer en temps réel la température des conducteurs électriques des bobinages et des noyaux de la machine électrique tournante en utilisant un modèle thermique. L'alimentation électrique de la machine électrique tournante est arrêtée lorsque la température estimée des bobinages atteint une température supérieure admissible.

Cependant, le modèle thermique décrit dans ce document n'est pas très précis.

De plus, la stratégie consistant à couper l'alimentation électrique lorsque la température des bobinages est trop élevée n'est pas adaptée à un actionneur d'embrayage. En effet, une telle action risquerait de désorienter le conducteur du véhicule et de provoquer un accident en rompant soudainement l'accouplement lorsque le véhicule roule.
US2006/0250154 propose à chaque itération d'estimer les résistances thermiques pour adapter le modèle thermique.

Pour résoudre ces problèmes l'invention propose un procédé du type décrit précédemment, caractérisé en ce qu'à chaque itération du procédé d'estimation, lesdites résistances thermiques et les capacités calorifique du stator et du rotor sont calculées en fonction des températures du rotor et du stator estimées à l'itération précédente, et en ce que le procédé comporte une étape de coupure qui est déclenchée lorsque le calculateur est désactivé, et au cours de laquelle les dernières valeurs estimées du vecteur d'état et les dernières valeurs collectées du vecteur d'excitation sont mémorisées par le calculateur avant sa désactivation complète..

Selon d'autres caractéristiques de la présente invention :

- l'équation résolue par le calculateur numérique fait intervenir la résistance électrique de chaque bobinage, et à chaque itération du procédé, ladite résistance électrique est calculée en fonction de la température de son ensemble porteur estimée à l'itération précédente ;
- le procédé comporte :

une première étape de collecte de valeurs de variables d'excitation thermique comportant au moins la température de l'air environnant la machine électrique tournante, ainsi que la puissance thermique dissipée sous forme de chaleur par le passage du courant électrique dans chaque bobinage ;
- une deuxième étape d'estimation des températures d'état du stator et du rotor, l'estimation des températures d'état étant réalisée en résolvant le système d'équations différentielles suivant :

$$\frac{d}{dt}\begin{bmatrix} \theta_s \\ \theta_r \end{bmatrix} = \begin{bmatrix} -\dfrac{1}{C_s \cdot R_{th-sr}} - \dfrac{1}{C_s \cdot R_{th-exts}} & \dfrac{1}{C_s \cdot R_{th-sr}} \\ \dfrac{1}{C_r \cdot R_{th-sr}} & -\dfrac{1}{C_r \cdot R_{th-sr}} \end{bmatrix} \cdot \begin{bmatrix} \theta_s \\ \theta_r \end{bmatrix} + \begin{bmatrix} \dfrac{1}{C_s} & 0 & \dfrac{1}{C_s \cdot R_{th-exts}} \\ 0 & \dfrac{1}{C_r} & \dfrac{1}{C_r \cdot R_{th-extr}} \end{bmatrix} \cdot \begin{bmatrix} P_{élec-s} \\ P_{élec-r} \\ \theta_{ext} \end{bmatrix}$$

la résolution de ce système d'équation étant réalisé par une méthode numérique telle que la méthode d'Euler, à partir des températures d'état estimées à l'itération précédente ;
- une troisième étape d'enregistrement des températures estimées lors de l'itération en cours afin de les utiliser lors de la prochaine itération du procédé ;

- la puissance thermique dissipée par chaque bobinage est calculée en multipliant la résistance électrique dudit bobinage par le carré de l'intensité électrique traversant ledit bobinage, l'intensité électrique étant mesurée ou estimée ;
- le procédé comporte une étape d'initialisation qui est déclenchée lors de la mise sous tension du calculateur numérique et qui comporte une première phase de comparaison d'une température de référence initiale mesurée ou estimée à l'instant de la réactivation avec une température ambiante mesurée ou estimée ;
- lorsque la température de référence initiale est égale à la température ambiante, les températures du vecteur d'état et du vecteur d'excitation sont toutes initialisées à la valeur de la température ambiante mesurée ;
- une deuxième phase de détermination de la durée de coupure du calculateur est enclenchée lorsque la température de référence est supérieure à la température ambiante mesurée à l'issue de la première phase de comparaison, et au cours de laquelle la durée de coupure entre la désactivation et la réactivation du calculateur est estimée par le calculateur en comparant la température de référence avec la valeur finale de ladite température de référence mémorisée avant la désactivation du calculateur ;
- la durée de coupure est déduite d'une cartographie qui est représentative de la vitesse de refroidissement de ladite variable de référence ;
- lors de l'étape d'initialisation, une troisième phase de détermination des températures d'initialisation du vecteur d'état lors de la réactivation est déclenchée à l'issue de la phase de détermination de la durée de coupure, au cours de laquelle les valeurs successives des variables d'état pendant la durée de coupure sont recalculées pas à pas en itérant autant que nécessaire les calculs de simulation de la troisième étape d'estimation à partir des valeurs finales mémorisées des variables d'état jusqu'à obtenir les valeurs des températures d'initialisation du vecteur d'état ;
- lors de la troisième phase de détermination, pour chaque itération du calcul de simulation, la valeur de chaque température des variables d'excitation est renouvelée suivant une cartographie préenregistrée dans le calculateur à partir de la dernière valeur enregistrée de ladite température et de la durée de coupure du calculateur ;
- au cours de la troisième phase, la puissance thermique dissipée par le bobinage est fixée comme nulle durant les itérations du calcul de simulation ;
- la température de référence est formée par la température du moteur du véhicule automobile ;
- la machine électrique tournante est un actionneur qui est destiné à commander un embrayage à friction du véhicule automobile.

D'autres caractéristiques et avantages apparaîtront au cours de la lecture de la description détaillée qui va suivre, pour la compréhension de laquelle on se reportera aux dessins annexés parmi lesquels :

- la figure 1 est une vue schématique en coupe axiale qui représente un embrayage à friction de véhicule automobile commandé par une machine électrique tournante ;
- la figure 2 est une vue en coupe transversale selon le plan de coupe 2-2 de la figure 1 qui représente schématiquement l'intérieur de la machine électrique tournante dans laquelle un bobinage est porté par le stator ;
- la figure 3 est une vue similaire à celle de la figure 2 qui représente une variante de la machine électrique tournante dans laquelle le bobinage est porté par le rotor ;
- la figure 4 est un schéma-bloc qui représente un procédé d'estimation de la température du stator et du rotor d'une machine électrique tournante qui est réalisé selon les enseignements de l'invention ;
- la figure 5 est un diagramme qui représente l'évolution de la température du moteur thermique du véhicule automobile comportant le dispositif d'embrayage lorsque le moteur est arrêté après une utilisation.

Pour la suite de la description, des éléments ayant des fonctions identiques, analogues ou similaires seront désignés par des mêmes numéros de référence.
Pour la suite de la description, les températures seront désignées par la lettre grecque "θ" suivie d'un indice indiquant l'élément auquel la température se rapporte. En outre, les durées seront indiquées parla lettre "t" ou "T".

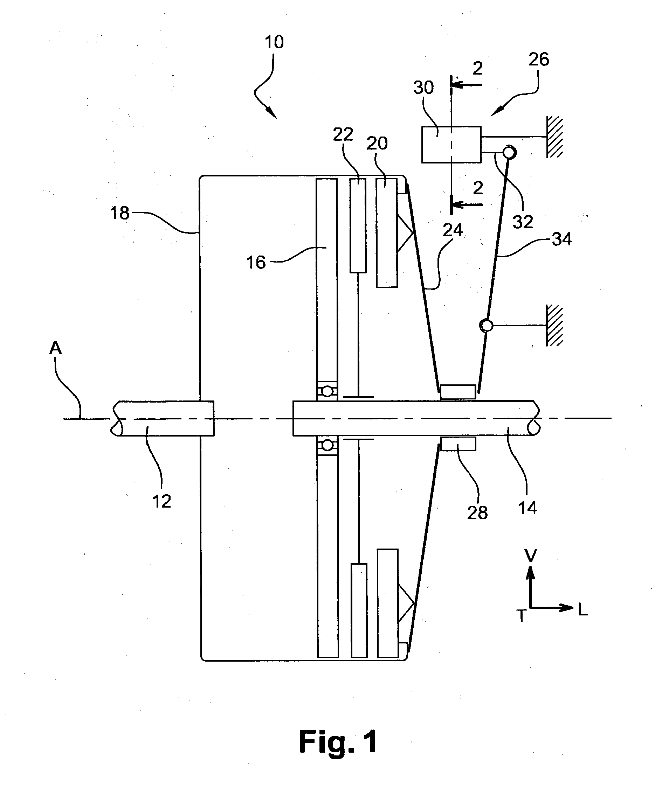

Dans la suite de la description, on adoptera à titre non limitatif des directions longitudinale, orientée d'arrière en avant, verticale, orientée de bas en haut, et transversale, orientée de gauche à droite qui sont indiquées par le trièdre "L,V,T" de la figure 1. La direction longitudinale est choisie comme étant parallèle à l'axe de rotation "A" du système d'embrayage.

On a représenté à la figure 1 un système d'embrayage 10 à friction qui est destiné à accoupler un arbre moteur 12 qui est agencé longitudinalement vers l'arrière avec au moins un arbre mené 14 qui est agencé vers l'avant.

L'arbre moteur 12 est rotatif autour d'un axe de rotation "A" et il est entraîné en rotation par un moteur (non représenté) du véhicule automobile.

L'arbre mené 14 est monté rotatif sensiblement coaxialement à l'arbre moteur 12. L'arbre mené 14 est relié à une boîte de vitesses avant (non représentée).

Le système d'embrayage 10 comporte des moyens d'accouplement temporaire de l'arbre mené 14 avec l'arbre moteur 12.

De manière connue, le système d'embrayage 10 comporte un plateau radical circulaire de réaction 16 qui est monté libre en rotation autour de l'axe de rotation "A". Le plateau de réaction 16 est porté par le tronçon d'extrémité arrière de l'arbre mené 14 par l'intermédiaire d'un roulement à billes. Le plateau de réaction 16 est plus particulièrement monté fixe longitudinalement par rapport à l'arbre mené 14. Par ailleurs, le plateau de réaction 16 est solidaire en rotation de l'arbre moteur 12 par l'intermédiaire d'un élément de liaison 18.

Les moyens d'accouplement comportent aussi un plateau annulaire avant de pression 20 qui est monté solidaire en rotation du plateau de réaction 16 autour de l'axe de rotation "A" et il est monté coulissant longitudinalement par rapport au plateau de réaction 16. Le plateau de pression 20 est plus particulièrement agencé longitudinalement en vis-à-vis d'une face avant du plateau de réaction 16.

Un disque coaxial de friction 22 est interposé longitudinalement entre le plateau de réaction 16 et le plateau de pression 20. Le disque de friction 22 comporte sur ses deux faces une garniture annulaire de friction. Le disque de friction 22 est monté solidaire en rotation de l'arbre mené 14, et il est monté coulissant longitudinalement sur l'arbre mené 14.

Le plateau de pression 20 est destiné à être commandé entre :

- une position extrême arrière d'embrayage dans laquelle le disque de friction 22 est serré contre la face avant du plateau de réaction 16 par le plateau de pression 20 pour accoupler temporairement l'arbre mené 14 avec l'arbre moteur 12 ; et
- une position extrême avant de débrayage dans laquelle le disque de friction 22 est écarté longitudinalement à la fois du plateau de réaction 16 et du plateau de pression 20 de manière que l'arbre mené 14 soit totalement découplé de l'arbre moteur 12.

Le plateau de pression 20 est aussi susceptible d'occuper une position intermédiaire de léchage dans laquelle le disque de friction 22 est serré de manière glissante entre le plateau de pression 20 et le plateau de réaction 16 de façon que le couple de l'arbre moteur 12 soit partiellement transmis à l'arbre mené 14.

De manière connue, le système d'embrayage 10 comporte aussi un diaphragme 24 annulaire coaxial avant d'actionnement du plateau de pression 20. Le diaphragme 24 comporte un anneau périphérique radialement extérieur depuis lequel des doigts élastiques s'étendent radialement vers l'axe de rotation "A" jusqu'à une extrémité intérieure libre.

L'anneau périphérique du diaphragme 24 est assujetti de manière pivotante à l'élément de liaison 18 fixe par rapport au plateau de réaction 16. Une portion intermédiaire de chaque doigt du diaphragme 24 est en appui axial sur une portion annulaire du plateau de pression 20.

Les doigts du diaphragme 24 sont flexibles élastiquement. Le diaphragme 24 est par exemple réalisé en un acier présentant des propriétés d'élasticité adaptées.

Le système d'embrayage 10 comporte un mécanisme de commande 26 du plateau de pression 20 entre sa position extrême d'embrayage et sa position extrême de débrayage.

Le mécanisme de commande 26 comporte une butée annulaire d'actionnement 28 de l'embrayage qui est montée autour de l'arbre mené 14 coulissante longitudinalement par rapport au diaphragme 24 sur une course d'embrayage qui est délimitée par une position extrême arrière de sollicitation dans laquelle elle sollicite axialement vers l'arrière l'extrémité intérieure libre des doigts du diaphragme 24 pour amener le plateau de pression 20 dans sa position extrême arrière d'embrayage, et une position extrême avant de repos vers laquelle la butée d'actionnement 28 est rappelée élastiquement par les doigts du diaphragme 24 et qui correspond ici à la position extrême de débrayage du plateau de pression 20.

Chaque doigt du diaphragme 24 fonctionne ainsi à la manière d'un levier qui pousse le plateau de pression 20 vers sa position extrême d'embrayage lorsque l'extrémité libre des doigts du diaphragme 24 est sollicitée par la butée d'actionnement 28.

Selon une variante non représentée de l'invention, le plateau de pression est agencé en arrière du plateau de réaction, et le diaphragme est agencé de manière à "tirer" le plateau de pression vers le plateau de réaction au lieu de le pousser.

Dans le mode de réalisation représenté à la figure 1, la position extrême avant de repos de la butée d'actionnement 28 correspond à la position extrême de débrayage du plateau de pression 20. Un tel système d'embrayage 10 est dit "normalement ouvert".

Selon une variante non représentée de l'invention, la position extrême avant de repos de la butée d'actionnement correspond à la position extrême d'embrayage du plateau de pression. Le système d'embrayage est alors dit "normalement fermé".

L'embrayage 10 est ici un embrayage du type "sec", c'est-à-dire que le plateau de réaction 16, le plateau de pression 20 et le disque de friction 22 sont tous les trois exposés en totalité à de l'air.

Selon une variante non représentée de l'invention, l'embrayage est un embrayage du type "humide", c'est-à-dire que le plateau de réaction, le plateau de pression et le disque de friction sont tous les trois plongés en totalité dans de l'huile.

Le coulissement de la butée d'actionnement 28 est commandé par une machine électrique tournante 30. La machine électrique tournante 30 comporte une tige 32 coulissante axialement. Le mouvement de coulissement de la tige 32 est transmis à la butée d'actionnement 28 par l'intermédiaire d'un levier 34 généralement appelé "fourchette".

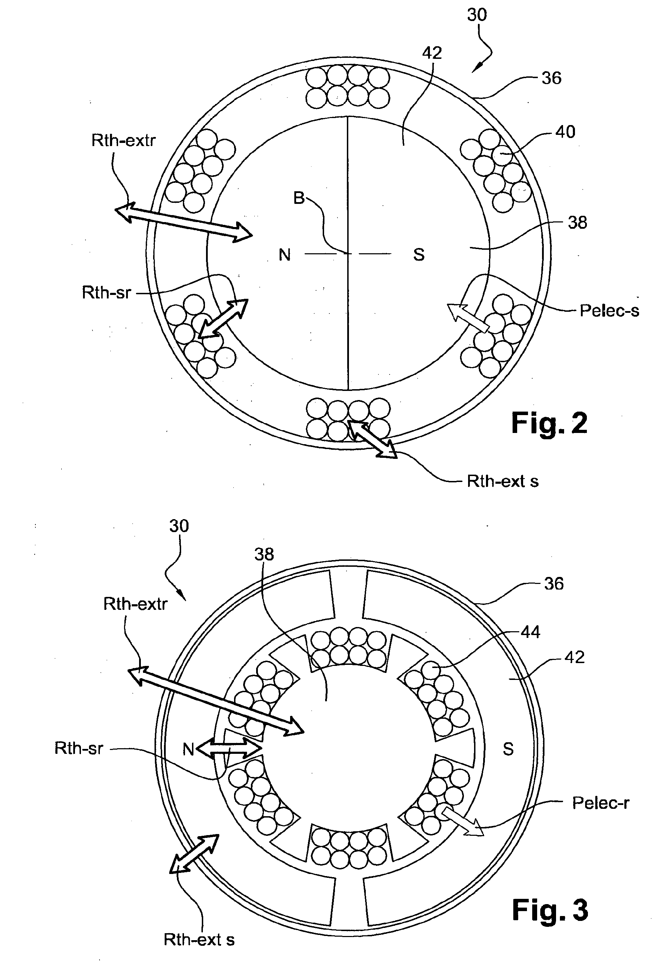

Comme représenté plus en détail à la figure 2, la machine électrique tournante 30 comporte au moins les composants suivants :

- un stator 36 fixe qui présente une forme annulaire d'axe longitudinal "B" ;
- un rotor 38 qui est agencé à l'intérieur du stator et qui est monté rotatif autour de l'axe longitudinal "B" ;
- le stator 36 et/ou le rotor 38 portant au moins un bobinage 40 ou 44 de conducteurs électriques qui est destiné à être traversé par un courant électrique pour commander la rotation du rotor 38 par rapport au stator 36.

Dans la suite de la description on comprendra que le terme "stator 36" englobe tous les matériaux intervenant dans le transfert de chaleur tels que la structure d'isolement et de support, ainsi que le noyau en fer si le stator 36 porte un bobinage 40 associé.

Par la suite, la température "$\theta_s$" du stator 36 est définie comme la température moyenne des matériaux composant le stator 36, sans prendre en compte la température du bobinage statorique 40.

De même, la capacité calorifique "$C_s$" du stator 36 est définie comme la capacité calorifique du stator 36 pris dans son ensemble.

Les définitions développées dans les trois paragraphes précédents s'appliquent aussi au terme "rotor 38" ainsi qu'à sa température "$\theta_r$" et à sa capacité calorifique "$C_r$".

Dans l'exemple représenté à la figure 2, la machine électrique tournante 30 est un moteur électrique dit "sans balais" ou "brushless". Son appellation "brushless" vient du fait que ce type de moteur ne contient aucun balai.

Dans ce cas, le bobinage 40 est porté par le stator 36. Le bobinage 40 sera donc appelé par la suite "bobinage statorique 40". Le bobinage statorique 40 est enroulé autour d'un ou de plusieurs éléments (non représentés) du stator 36 destinés à former noyau. Les noyaux et le bobinage statorique 36 forment ainsi un électro-aimant apte à émettre un champs magnétique lorsque le bobinage statorique 40 est traversé par un courant électrique.

Le rotor 38 ne comporte pas de bobinage, mais il comporte des éléments réalisés en un matériau magnétique formant un ou plusieurs aimants permanents 42.

Le bobinage statorique 40 est ici destiné à être traversé par un courant électrique continu.

Selon une variante de l'invention représentée à la figure 3, le bobinage 44 est porté par le rotor 38. Le bobinage 44 sera donc appelé par la suite "bobinage rotorique 44". Le bobinage rotorique 44 est enroulé autour d'un ou de plusieurs éléments (non représentés) du rotor 38 destinés à former noyau. Les noyaux et le bobinage rotorique 44 forment ainsi un électro-aimant apte à émettre un champs magnétique lorsque le bobinage rotorique 44 est traversé par un courant électrique.

Le stator 36 ne comporte pas de bobinage, mais il comporte un ou plusieurs éléments réalisés en un matériau magnétique formant un ou plusieurs aimants permanents 42.

Cette machine électrique tournante est ainsi un moteur électrique dit "à balais". Son appellation vient du fait qu'il comporte des balais (non représentés) pour conduire le courant électrique d'excitation jusqu'au bobinage rotorique.

Le bobinage rotorique 44 est ici destiné à être traversé par un courant électrique continu.

Selon une autre variante non représentée de l'invention, le stator 36 et le rotor 38 portent chacun au moins un bobinage 42, 44 associé.

Lors de l'activation de la machine électrique tournante 30, les bobinages statorique 40 et/ou rotorique 44 sont traversés par un courant électrique qui produit une dissipation de chaleur par effet Joule.

Lors d'une utilisation normale de l'embrayage 10, la machine électrique tournante 30 est sollicitée sur de brèves périodes de transition lorsque la butée d'actionnement 28 est en mouvement. Entre ces périodes de fonctionnement, le ou les bobinages 40, 44 ne sont pas traversés par un courant électrique. Le stator 36 et le rotor 38 ont donc le temps de refroidir en évacuant la chaleur produite par effet Joule.

Cependant, la facilité d'utilisation d'un tel embrayage 10 commandé par un actionneur à machine électrique tournante 30 peut amener le conducteur du véhicule automobile à solliciter la machine électrique tournante 30 au-delà de ses capacités. C'est le cas lorsque le conducteur maintient le véhicule immobile sur une rampe à l'aide du système d'embrayage 10 au lieu d'utiliser le frein du véhicule, ou encore lorsque les rapports de vitesse du véhicule sont changées à un rythme très élevé.

Le ou les bobinages 40, 44 sont alors traversés par un courant électrique pendant une période prolongée, ou par intermittence avec des périodes d'interruption trop faibles pour permettre un refroidissement optimal du stator 36 ou rotor 38. Ceci peut conduire à un échauffement dommageable, voire même destructeur, de la machine électrique tournante 30.

Pour éviter la destruction de la machine électrique tournante 30, il est connu de mettre en oeuvre des mesures d'avertissement ou de protection de la machine électrique tournante 30 lorsque la température du stator 36 et/ou du rotor 38 atteint un seuil prédéterminé. De telles mesures d'avertissement ou de protection ne font pas l'objet de l'invention, elles ne seront donc pas décrites plus en détail par la suite. Un exemple de telles mesures de protection est décrit dans le document FR-A-2.896.354.

Pour que de telles mesures soient déclenchées à temps et à bon escient, il est nécessaire d'obtenir une estimation précise de la température du stator 36 et du rotor 38 de la machine électrique tournante 30.

La présente invention propose un procédé d'estimation en temps réel de la température du stator 36 et du rotor 38 de la machine électrique tournante 30. Ce procédé est destiné à être mis en oeuvre par un calculateur numérique (non représenté) embarqué à bord du véhicule automobile.

Dans un premier temps, le procédé sera décrit en application à une machine électrique tournante sans balais 30 en se référant à la figure 2.

Le procédé d'estimation met en oeuvre un modèle thermique qui est représenté schématiquement à la figure 2. Le modèle thermique prend en compte les flux de chaleur échangés entre plusieurs composants de la machine électrique tournante 30.

Les flux de chaleur échangés en interne entre les composants de la machine électrique tournante 30 et en externe avec l'air environnant sont indiqués par des flèches à la figure 2.

La flèche à sens unique "$P_{elec-s}$" de la figure 2 représente la puissance thermique dissipée par effet Joule par le bobinage statorique 40.

La puissance thermique, en watt, dissipée par un bobinage, par exemple "$P_{elec-s}$" pour la machine électrique tournante 30 représentée à la figure 2, est sensiblement égale au produit entre la tension "V", en volt, et l'intensité "I", en ampère, du courant qui traverse ledit bobinage.

De manière connue, la tension du courant électrique qui traverse un bobinage est aussi égale au produit entre la résistance électrique "$R_{ele-s}$" dudit bobinage et l'intensité "I", en ampère, dudit courant électrique.

Ainsi pour la machine électrique tournante 30 représentée à la figure 2, la puissance thermique est calculée selon l'équation "EQ1" suivante :

$$(EQ1): \quad P_{elec-s} = R_{elec-s} \cdot I^2$$

Les flèches à double sens représentent les échanges thermiques par rayonnement et/ou par convection et/ou par conduction entre deux éléments voisins. Chaque flèche est indiquée par la référence "$R_{th}$" qui représente la résistance à l'échange thermique entre les deux éléments à laquelle sont associés deux indices pour indiquer les éléments qui s'y rapportent. Ainsi, on utilisera les notations suivantes :

- "$R_{th-sr}$" représente la résistance à l'échange thermique entre le stator 36 et le rotor 38 ;
- "$R_{th-exts}$" représente la résistance à l'échange thermique entre l'air environnant et le stator 36 ;
- "$R_{th-extr}$" représente la résistance à l'échange thermique entre l'air environnant et le rotor 38.

Pour simplifier la suite de la description, une "résistance à l'échange thermique entre deux milieux" "$R_{th}$" sera désignée par l'expression "résistance thermique entre deux milieux".

Les différents éléments sont considérés comme étant des milieux homogènes et isotropes pour lesquels la résistance à la chaleur "$R_{th}$" est la même dans les deux sens d'échange.

Pour la suite de la description, la capacité calorifique du stator 36 sera notée "$C_s$" et la capacité calorifique du rotor 38 sera notée "$C_r$".

Selon le premier principe de la thermodynamique de la conservation de l'énergie pour un élément donné de la machine électrique tournante 30, la puissance emmagasinée "P$_{emmagasinée}$" dans ledit élément est égale à la puissance thermique "P$_{elec}$" dissipée par effet Joule additionnée de la puissance thermique "P$_{échangée}$" échangée avec un élément voisin. Ce principe est formulé par l'équation "EQ2" suivante :

$$EQ2 : P_{emmagasinée} = P_{elec} + P_{echangée}$$

Ce principe est à présent appliqué au stator 36. La puissance thermique emmagasinée dans le stator 36 est égale à la variation par rapport au temps de sa température "$\theta_s$" multipliée par sa capacité calorifique "$C_s$". Ceci est formulé par l'équation "EQ3" suivante :

$$EQ3 : P_{emmaga\sin ée} = C_s \cdot \frac{d\theta_s}{dt}$$

dans laquelle $\dfrac{d\theta_s}{dt}$ représente la dérivée par rapport au temps de la température du stator 36.

La puissance thermique "P$_{elec\text{-}s}$" apportée au stator 36 a déjà été formulée dans l'équation "EQ1".

Le stator 36 est agencé à proximité ou au contact de l'air environnant directement la machine électrique tournante 30, d'une part, et du rotor 38 d'autre part.

La puissance thermique "P$_{échangée\text{-}sr}$" échangée par le stator 36 avec le rotor 38 se formule selon l'équation "EQ4" suivante :

$$EQ4 : P_{échangée\text{-}sr} = -\frac{(\theta_s - \theta_r)}{R_{th\text{-}sr}}$$

dans laquelle :

- "$\theta_s$" représente la température du stator 36 ;
- "$\theta_r$" représente la température du rotor 38 ;
- "$R_{th\text{-}sr}$" représente la résistance thermique à l'échange entre le stator 36 et le rotor 38.

La puissance thermique "P$_{échangée\text{-}exts}$" échangée par le stator 36 avec l'air environnant se formule selon l'équation "EQ5" suivante :

$$EQ5 : P_{échangée\text{-}exts} = -\frac{(\theta_s - \theta_{ext})}{R_{th\text{-}exts}}$$

dans laquelle :

- "$\theta_s$" représente la température du stator 36 ;
- "$\theta_{ext}$" représente la température de l'air environnant ;
- "$R_{th\text{-}exts}$" représente la résistance thermique à l'échange entre le stator 36 et l'air environnant.

Ainsi le principe de conservation de l'énergie appliqué au stator 36 permet d'obtenir l'équation différentielle "EQ6" suivante :

$$EQ6 : \frac{d\theta_s}{dt} = \frac{\theta_r - \theta_s}{C_s \cdot R_{th\text{-}sr}} + \frac{\theta_{ext} - \theta_s}{C_s \cdot R_{th\text{-}exts}} + \frac{P_{élec\text{-}s}}{C_s}$$

En appliquant un raisonnement identique pour le rotor 38 de la machine électrique tournante 30 représentée à la figure 2 qui ne porte pas de bobinage et qui est agencé uniquement à proximité du stator 36, le principe de conservation de l'énergie permet d'obtenir une deuxième équation différentielle "EQ 7" suivante :

$$EQ7 : \frac{d\theta_r}{dt} = \frac{\theta_s - \theta_r}{C_r \cdot R_{th-sr}} + \frac{\theta_{ext} - \theta_r}{C_r \cdot R_{th-extr}}$$

dans laquelle "$R_{th-extr}$" représente la résistance thermique à l'échange entre le rotor 38 et l'air environnant.

A partir des équations différentielles "EQ6" et "EQ7", on obtient un système d'équations différentielles formant une équation d'état qui peut être formulée sous la forme matricielle "EQ8'" suivante :

$$EQ8 : \frac{d}{dt}\begin{Bmatrix}\theta_s \\ \theta_r\end{Bmatrix} = [A]\begin{Bmatrix}\theta_s \\ \theta_r\end{Bmatrix} + [B]\begin{Bmatrix}P_{elec-s} \\ \theta_{ext}\end{Bmatrix}$$

dans laquelle :

$$[A] = \begin{bmatrix} -\dfrac{1}{C_s \cdot R_{th-sr}} - \dfrac{1}{C_s \cdot R_{th-exts}} & \dfrac{1}{C_s \cdot R_{th-sr}} \\ \dfrac{1}{C_r \cdot R_{th-sr}} & -\dfrac{1}{C_r \cdot R_{th-sr}} - \dfrac{1}{C_r \cdot R_{th-extr}} \end{bmatrix}$$

et

$$[B] = \begin{bmatrix} \dfrac{1}{C_s} & \dfrac{1}{C_s \cdot R_{th-exts}} \\ 0 & \dfrac{1}{C_r \cdot R_{th-extr}} \end{bmatrix}$$

En abrégé, cette équation d'état à temps continu peut s'écrire de manière simplifiée de la façon suivante :

$$\begin{Bmatrix}\dfrac{d\theta}{dt}\end{Bmatrix} = [A]\cdot\{\theta\} + [B]\cdot\{U\}$$

- dans laquelle $\{\theta\}$ est un vecteur d'état thermique de la machine électrique tournante dans lequel sont stockées les températures $\theta s$, $\theta r$ du stator 36 et du rotor 38 ;
- dans laquelle $\{U\}$ est un vecteur d'excitation dans lequel sont stockées les variables qui influencent la machine électrique tournante 30 depuis l'extérieur telles que la puissances thermique dissipée par effet Joule "Pelec-s" et la température de l'air environnant "$\theta_{ext}$" ;
- dans laquelle [A] est une matrice dite d'évolution du système d'états ;
- et dans laquelle [B] est une matrice dite d'excitation ou de commande du système d'états.

Cette équation d'état permet de simuler l'évolution des températures, c'est-à-dire du vecteur d'état, du dispositif d'embrayage 16.

Le modèle thermique présenté est ainsi formulé mathématiquement sous la forme d'une équation d'état à temps continu dans laquelle la dérivée par rapport au temps du vecteur d'état $\{d\theta/dt\}$ est obtenue en fonction du vecteur d'état $\{\theta\}$ et du vecteur d'excitation $\{U\}$.

Les variables contenues dans le vecteur d'excitation $\{U\}$ sont des mesures instantanées ou des estimations obtenues à partir de mesures instantanées qui permettent l'estimation du vecteur d'état $\{\theta\}$ à chaque instant "t".

Le vecteur d'excitation $\{U\}$ est déduit soit directement à partir des mesures des diverses puissances et températures, soit de leur estimation.

Notamment, la puissance thermique "Pelec-s" dissipée par effet Joule par le bobinage statorique 40 est calculée selon l'équation "EQ1" en fonction de l'intensité "I" mesurée ou estimée du courant électrique, et en fonction de la résistance électrique "Relec-s" du bobinage 40.

La température extérieure "$\theta_{ext}$" est par exemple mesurée directement avec une sonde adaptée.

Selon une variante de l'invention, la température extérieure "$\theta_{ext}$" est estimée à partir d'autres grandeurs et de la connaissance de la relation de ces grandeurs avec ladite température extérieure "$\theta_{ext}$", par exemple la température du moteur thermique, la température ambiante, la vitesse du véhicule, etc.

Selon une variante de l'invention, en appliquant le modèle thermique décrit ci-dessus à la machine électrique tournante représentée à la figure 3, on obtient une équation "EQ9" similaire à l'équation "EQ8" et qui est formulée de la manière suivante :

$$\text{EQ9} : \frac{d}{dt}\left\{\begin{matrix}\theta_s \\ \theta_r\end{matrix}\right\} = [A]\left\{\begin{matrix}\theta_s \\ \theta_r\end{matrix}\right\} + [B]\left\{\begin{matrix}P_{elec-r} \\ \theta_{ext}\end{matrix}\right\}$$

dans laquelle :

$$[A] = \begin{bmatrix} -\dfrac{1}{C_s \cdot R_{th-sr}} - \dfrac{1}{C_s \cdot R_{th-exts}} & \dfrac{1}{C_s \cdot R_{th-sr}} \\ \dfrac{1}{C_r \cdot R_{th-sr}} & -\dfrac{1}{C_r \cdot R_{th-sr}} - \dfrac{1}{C_r \cdot R_{th-extr}} \end{bmatrix}$$

et

$$[B] = \begin{bmatrix} 0 & \dfrac{1}{C_s \cdot R_{th-exts}} \\ \dfrac{1}{C_r} & \dfrac{1}{C_r \cdot R_{th-extr}} \end{bmatrix}$$

avec "$P_{elec-r}$" qui représente la puissance thermique dissipée par effet Joule par le passage du courant électrique dans le bobinage rotorique 44.

Selon encore une autre variante de l'invention, les équations "EQ8" et "EQ9" peuvent être généralisées pour obtenir l'équation "EQ10" suivante qui est applicable à tous les cas de figure :

$$\text{EQ10} : \frac{d}{dt}\left\{\begin{matrix}\theta_s \\ \theta_r\end{matrix}\right\} = [A] \cdot \left\{\begin{matrix}\theta_s \\ \theta_r\end{matrix}\right\} + [B] \cdot \left\{\begin{matrix}P_{élec-s} \\ P_{élec-r} \\ \theta_{ext}\end{matrix}\right\}$$

$$\text{avec } [A] = \begin{bmatrix} -\dfrac{1}{C_s \cdot R_{th-sr}} - \dfrac{1}{C_s \cdot R_{th-exts}} & \dfrac{1}{C_s \cdot R_{th-sr}} \\ \dfrac{1}{C_r \cdot R_{th-sr}} & -\dfrac{1}{C_r \cdot R_{th-sr}} - \dfrac{1}{C_r \cdot R_{th-extr}} \end{bmatrix}$$

$$\text{et avec } [B] = \begin{bmatrix} \dfrac{1}{C_s} & 0 & \dfrac{1}{C_s \cdot R_{th-exts}} \\ 0 & \dfrac{1}{C_r} & \dfrac{1}{C_r \cdot R_{th-extr}} \end{bmatrix}$$

dans lequel :

- $\theta_s$ représente la température du stator ;
- $\theta_r$ représente la température du rotor ;
- $\theta_{ext}$ représente la température de l'air environnant ;
- $P_{elec\text{-}s}$ représente la puissance thermique dissipée par effet Joule par le bobinage statorique 40, cette variable étant nulle si le stator 36 ne porte pas de bobinage ;
- $P_{elec\text{-}r}$ représente la puissance thermique dissipée par effet Joule par le bobinage rotorique 44, cette variable étant nulle si le rotor 38 ne porte pas de bobinage ;
- Cs représente la capacité calorifique du stator ;
- Cr représente la capacité calorifique du rotor ;
- $R_{th\text{-}sr}$ représente la résistance aux échanges thermiques entre le stator 36 et le rotor 38 ;
- $R_{th\text{-}exts}$ représente la résistance aux échanges thermiques entre le stator 36 et l'air environnant le stator 36 ;
- $R_{th\text{-}extr}$ représente la résistance aux échanges thermiques entre le rotor 38 et l'air environnant le stator (36).

Cette équation "EQ10" est ainsi applicable à une machine électrique tournante 30 comportant un bobinage statorique 40 et un bobinage rotorique 44.

Cette équation "EQ10" est aussi applicable à une machine électrique tournante 30 ne comportant pas de bobinage statorique 40, comme représentée à la figure 2. Dans ce cas, la valeur de la puissance thermique "$P_{elec\text{-}s}$" dissipée par effet Joule est fixée comme nulle.

De même, cette équation "EQ10" est aussi applicable à une machine électrique tournante 30 ne comportant pas de bobinage rotorique 44, comme représentée à la figure 3. Dans ce cas, la valeur de la puissance thermique "$P_{elec\text{-}r}$" dissipée par effet Joule est fixée comme nulle.

Dans la suite de la description, le procédé sera appliqué en mettant en oeuvre le système d'équations "EQ10". On comprendra cependant que le procédé est aussi applicable aux systèmes d'équations simplifiés "EQ8" et "EQ9".

Le véhicule automobile comporte un calculateur numérique (non représenté) qui est destiné à mettre en oeuvre le procédé utilisant ce modèle mathématique pour permettre de connaître à tout moment les valeurs du vecteur d'état {$\theta$} afin d'éviter que la machine électrique tournante 30 ne soit endommagée par surchauffe.

Pour pouvoir utiliser ce modèle dans un calculateur numérique, le système d'équations "EQ10" est résolu par une méthode numérique telle que la méthode d'Euler, à partir des températures d'état {$\theta$}$_{t-1}$ estimées à l'itération précédente. A cet effet, l'équation d'état précédente est discrétisé pour passer d'une équation d'état à temps continu à une équation d'état à temps échantillonné. Il existe plusieurs méthodes de discrétisation dont les plus connues sont Euler explicite et Tustin.

La transformée d'Euler explicite conduit à poser l'équation "EQ11" suivante :

$$EQ11 : \dot{\theta} = \frac{\theta_{t+1} - \theta_t}{T}$$

T étant la période d'échantillonnage utilisée pour réaliser l'intégration de l'équation d'état dans le calculateur numérique. Elle correspond à la fréquence de rafraîchissement des informations du vecteur d'excitation {U} et par conséquent à la fréquence de rafraîchissement des informations du vecteur d'état {$\theta$}.

Pour la suite de la description, on notera {$\theta$}$_t$ le vecteur d'état estimé au temps "t". Chaque temps "t" est séparé du temps suivant "t+1" de la période d'échantillonnage "T".

Le calculateur numérique mettant en oeuvre ces équations d'état à temps échantillonné est donc capable de prédire les températures du stator 36 et du rotor 38 à l'instant suivant "t+1". Le système d'équations discrétisé "EQ12" est alors noté de la manière suivante :

$$EQ12 : \{\theta\}_{t+1} = [A]_d \cdot \{\theta\}_t + [B]_d \cdot \{U\}_t$$

dans laquelle [A]$_d$ et [B]$_d$ sont les transformées des matrices [A] et [B] par la relation de discrétisation. Elles dépendent des mêmes paramètres que les matrices non transformées, notamment des résistances thermiques, de la résistance électrique du bobinage 40 ainsi que des capacités calorifiques "$C_s$" et "$C_r$)".

Comme cela sera expliqué plus en détail par la suite, certains paramètres des matrices [A], [A]$_d$, [B] et [B]$_d$ sont variables en fonction de facteurs estimés ou mesurés décrivant l'état de fonctionnement du véhicule, tels que la vitesse de rotation du moteur, le rapport de transmission engagé dans la boîte de vitesses 18, la vitesse véhicule, la température ambiante à l'extérieur du compartiment moteur, voire même des valeurs du vecteur d'état {θ} lui-même. Ceci permet d'obtenir une estimation très précise des températures du stator 36 et du rotor 38.

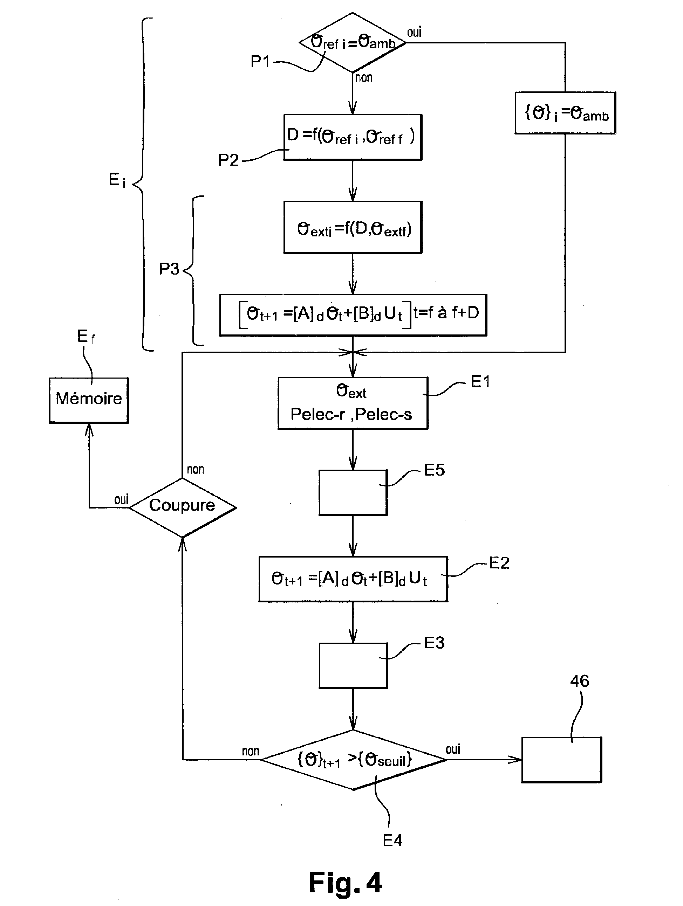

Le procédé d'estimation en temps réel de la température du stator 36 et du rotor 38 est à présent décrit en référence à la figure 4.

A chaque itération du procédé, le calculateur met en oeuvre une première étape "E1" de collecte de valeurs de variables d'excitation thermique du vecteur d'excitation {U}, comportant ici la température "$\theta_{ext}$" de l'air environnant le stator 36 de la machine électrique tournante 30, ainsi que la puissance thermique "$P_{elec-s}$" et/ou "$P_{elec-r}$" dissipée par effet Joule par le passage du courant électrique dans chaque bobinage 40, 44.

Comme expliqué précédemment, la puissance thermique dissipée par effet Joule "$P_{elec-s}$" et "$P_{elec-r}$" est ici calculée en multipliant la résistance électrique "$R_{elec-s}$", "$R_{elec-r}$" par le carré de l'intensité du courant électrique qui traverse ledit bobinage 40, 44.

Ensuite, lors d'une deuxième étape "E2" d'estimation de variables d'état thermique du vecteur d'état $\{\theta\}_t$ de la machine électrique tournante 30, l'estimation des variables d'état pour le temps suivant "t" est réalisée en calculant l'équation "EQ12" dans laquelle la matrice d'évolution [A] est multipliée par le vecteur d'état $\{\theta\}_{t-1}$ comportant les valeurs des variables d'état actuelles estimées lors de la précédente itération et dans laquelle la matrice de commande [B] est multipliée par le vecteur $\{U\}_{t-1}$ d'excitation comportant les valeurs des variables d'excitation à l'instant "t-1" collectées lors de la première étape "E1". Ces opérations de calcul seront par la suite appelées "calcul de simulation".

Puis, lors d'une troisième étape d'enregistrement "E3", les températures $\{\theta\}_t$ estimées lors de l'itération en cours sont enregistrées dans une mémoire du calculateur numérique afin de pouvoir être utilisées lors de la prochaine itération du procédé.

Ensuite, lors d'une quatrième étape "E4", le calculateur numérique compare les températures du vecteur d'état $\{\theta\}_{t+1}$ obtenu pour l'instant "t+1" avec des seuils associés prédéterminés $\{\theta_{seuil}\}$. Si au moins une des températures est détectée comme dépassant le seuil, des moyens d'action 46 sont déclenchés pour éviter la surchauffe de la machine électrique tournante 30.

Si les températures du vecteur d'état $\{\theta\}_{t+1}$ sont toutes inférieures aux températures de seuil $\{\theta_{seuil}\}$, le procédé est réitéré depuis la première étape "E1" afin d'estimer la prochaine valeur du vecteur d'état $\{\theta\}_{t+1}$.

On a constaté que l'estimation des températures du vecteur d'état $\{\theta\}_t$ au temps "t" ne sont représentatives des températures réelles qu'à condition que les températures du vecteur d'état $\{\theta\}_{t-1}$ calculé au temps "t-1" soient elles-mêmes très proches des températures réelles.

Afin d'obtenir une estimation très précise des températures $\{\theta\}_t$, le procédé comporte, à chaque itération, une étape "E5" de mise à jour des valeurs de certains paramètres de la matrice d'évolution [A] et de la matrice de commande [B]. Cette étape intervient ici en début d'itération, avant la deuxième étape "E2".

Il est notamment connu que les résistances thermiques "$R_{th-exts}$", "$R_{th-sr}$", "$R_{th-extr}$" et les capacités calorifiques "$C_s$", "$C_r$" sont variables en fonction de la température des éléments concernés. Ainsi, à chaque itération du procédé d'estimation, les résistances thermiques "$R_{th-exts}$", "$R_{th-sr}$", "$R_{th-extr}$" et les capacités calorifiques "$C_s$", "$C_r$" sont calculées notamment en fonction des températures $\{\theta\}_{t-1}$ estimées à l'itération précédente.

Les lois de variation des résistances thermiques et des capacités calorifiques sont par exemple déterminées par expérimentation sur banc d'essai ou sur des véhicules représentatifs par des techniques d'identification bien connues de l'homme de l'art. Les lois de variations peuvent ainsi prendre la forme de cartographies ou de relations polynomiales.

De même, il est connu que la résistance électrique d'un matériau dépend de sa température. Ainsi, la résistance électrique "$R_{elec-s}$"; "$R_{elec-r}$" de chaque bobinage 40, 44 est calculée en fonction de la température "$\theta_s$", "$\theta_r$" de son élément porteur 36, 38 estimée à l'itération précédente.

Selon une variante non représentée de l'invention, l'étape "E5" de mise à jour intervient après la deuxième étape "E2". Les nouvelles valeurs des paramètres des matrices [A] et [B] sont alors réalisées en fonction des températures $\{\theta\}_t$ estimées lors de l'itération en cours.

Lorsque le contact du véhicule est coupé, le calculateur numérique est désactivé, c'est-à-dire qu'il est mis hors tension, et le procédé d'estimation est interrompu jusqu'à ce que le calculateur soit réactivé, c'est-à-dire remis sous tension.

Par ailleurs, la justesse du modèle et sa rapidité de convergence dépendent de la qualité de l'estimation des températures initiales $\{\theta\}_i$ lors de la réactivation du calculateur. Le moment de réactivation du calculateur sera par la suite appelé temps "$t_i$", par exemple lors de la remise en route du moteur.

Si les températures du vecteur d'état initial $\{\theta\}_i$, c'est-à-dire lors de la réactivation du calculateur, sont trop éloignées des températures réelles, les estimations du vecteur d'état $\{\theta\}_{i+n}$, qui sont obtenues après "n" itérations suivant la réactivation, risquent aussi d'être très différentes des températures réelles.

Ces écarts entre les températures estimées et les températures réelles peuvent soit conduire à un problème d'endommagement de la machine électrique tournante 30 si les températures sont sous estimées par le calculateur numérique, soit à une alarme intempestive dans le cas ou elles sont surestimées par le calculateur numérique.

Le procédé selon l'invention comporte donc une étape de coupure. "Ef" qui est déclenchée lorsque le calculateur est désactivé. Par la suite le moment de la désactivation sera désigné par le temps "t$_f$".

Au cours de cette étape "Ef", les dernières valeurs estimées du vecteur d'état {θ}$_f$ et les dernières valeurs collectées du vecteur d'excitation {θ}$_f$ sont mémorisées dans des moyens de mémorisation du calculateur avant sa désactivation complète.

Les vecteurs mémorisés seront appelés par la suite vecteur d'état final {θ}$_f$ et vecteur d'excitation final {θ}$_f$.

Par la suite, les valeurs d'une variable ou d'un facteur mémorisées lors de l'étape de coupure "Ef" seront suivies de l'indice "f" tandis que les valeurs initiales du paramètre prise lors de la réactivation du calculateur pour initialiser le procédé seront suivies de l'indice "i".

Lors de la réactivation du calculateur, une étape préalable "Ei" d'initialisation du procédé d'estimation est déclenchée. Cette étape "Ei" comporte une première phase "P1" de comparaison d'une température de référence "θref$_i$" mesurée lors de la réactivation avec la température ambiante "θ$_{amb}$" mesurée à l'extérieur du compartiment moteur du véhicule lors de ladite réactivation.

La température de référence "θref$_i$" mesurée lors de la réactivation est ici la température du moteur "θ$_m$".

Selon une variante non représentée de l'invention, la température de référence est la température de l'air environnant "θ$_{ext}$" le stator 36.

Lorsque la température de référence "θref$_i$" est voisine de la température mesurée ambiante "θ$_{amb}$", on considère que le moteur est éteint depuis suffisamment longtemps pour que tous les éléments du groupe motopropulseur, et notamment le stator 36 et le rotor 38 de la machine électrique tournante 30, soient refroidis à la même température que la température ambiante "θ$_{amb}$". Les températures du vecteur d'état initial {θ}$_i$ et du vecteur d'excitation initial {θ}$_i$ sont toutes initialisées par le calculateur à la valeur de la température ambiante "θ$_{amb}$" mesurée.

Par contre, lorsque le moteur est encore chaud, c'est-à-dire lorsque la température initiale de référence "θref$_i$" est supérieure à la température ambiante mesurée "θ$_{amb}$", la coupure du calculateur rend impossible l'estimation des températures du stator 36 et du rotor 38 du fait de l'absence d'information sur la durée "D" de cette coupure.

Le vecteur d'excitation {U} et le vecteur d'état réel {θ} ont alors évolués depuis leurs valeurs finales {U}$_f$, {θ}$_r$.

On a donc besoin d'estimer la valeur initiale du vecteur d'état {θ}$_i$ à l'instant "ti" de la réactivation du calculateur.

Pour ce faire nous avons besoin de connaître la durée "D" de la coupure du calculateur ainsi que l'évolution du vecteur d'excitation {U} pendant la coupure entre les temps "t$_f$" et "t$_i$".

Si la durée n'est pas déjà disponible sur l'un des systèmes présents sur le véhicule (un ordinateur de bord par exemple), une deuxième phase "P2" de détermination de la durée de coupure "D" du calculateur est alors enclenchée lorsque la température de référence "θref$_i$" du moteur est supérieure à la température ambiante mesurée "θ$_{amb}$". La durée de coupure "D" entre la désactivation et la réactivation du calculateur est estimée par le calculateur en comparant la température de référence initiale mesurée "θref$_i$", par exemple la température du moteur, avec la température de référence finale "θref$_f$" du moteur mémorisée avant la désactivation du calculateur lors de l'étape de coupure "Ef".

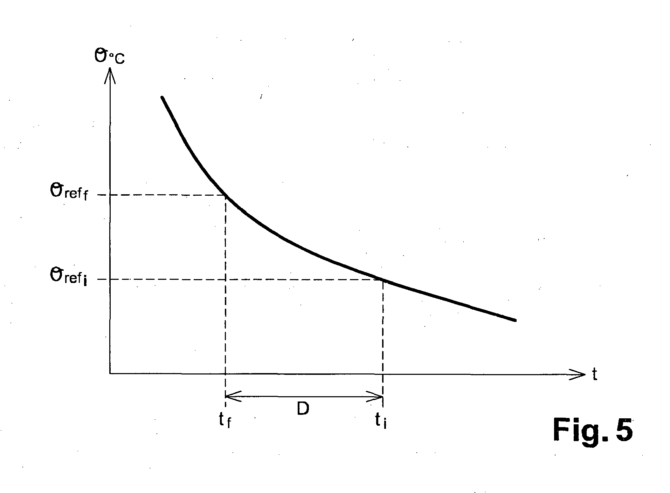

La durée de coupure "D" est alors déduite d'une cartographie, telle que représentée à la figure 5, qui est représentative de la vitesse de refroidissement de ladite température de référence, qui est ici la température du moteur "θ$_m$".

Dans ce procédé, on considère que la température ambiante "θ$_{amb}$" varie très lentement de manière que le refroidissement de l'élément de référence, ici le moteur, sur la cartographie est considéré à température ambiante "θ$_{amb}$" constante.

Ainsi, en pointant sur la carte l'écart entre la température de référence finale "θref$_f$" mémorisée à la coupure du calculateur et la température de référence initiale "θref$_i$", mesurée ou déterminée par d'autres moyens, à la réactivation, on peut alors facilement déterminer la durée de coupure "D" du calculateur.

Une troisième phase "P3" de détermination du vecteur d'état {θ}$_i$ est déclenchée à l'issue de la phase "P2" de détermination de la durée de coupure "D". Au cours de cette phase "P3", l'évolution des températures du vecteur d'état {θ} pendant la coupure est simulée en accéléré.

Ainsi, les valeurs successives de chaque température des variables d'état sont recalculées pas à pas depuis les valeurs finales mémorisée des variables d'état {θ}$_f$ pendant toute la durée de coupure "D" en itérant autant que nécessaire les calculs de simulation de la deuxième étape d'estimation "E2" pour parvenir à une estimation du vecteur d'état d'initialisation {θ}$_i$.

Le vecteur d'excitation {U} est renouvelé à chaque itération du calcul de simulation.

Il ne peut y avoir de dissipation de chaleur par effet Joule quand le véhicule est à l'arrêt avec le contact coupé. Les puissances dissipées "P$_{elec-s}$" et "P$_{elec-r}$" sont donc fixées comme nulles pendant toute la durée de la coupure "D".

Au cours de cette troisième étape "P3", la valeur à chaque itération de la température "θ$_{ext}$" du vecteur d'excitation {U} est déduite d'une cartographie préenregistrée, similaire à celle représentée à la figure 5, dans le calculateur à partir de la dernière valeur enregistrée {U}$_f$ de ladite température "θ$_{ext}$" et de la durée de coupure "D" du calculateur. Ainsi, à l'instant "t$_x$" compris entre l'instant de désactivation "t$_f$" et l'instant de réactivation "t$_i$", la valeur correspondante de la température de l'air environnant "θ$_{ext}$" est simplement lue sur la cartographie.

Les cartographies sont réalisées à partir de lois de refroidissement connues ou à partir d'observations en fonction du temps et en fonction de grandeurs ayant une variation temporelle lente telle que la température ambiante "$\theta_{amb}$" au véhicule.

La loi d'évolution du vecteur d'excitation {U}, et notamment de la température environnante "$\theta_{ext}$" pendant la coupure, c'est-à-dire la valeur de chaque variable du vecteur {U} pour chaque instant "t" compris entre la désactivation "$t_f$" et la réactivation "$t_i$" du calculateur, et la durée de la coupure "D" sont alors connues.

Ainsi, le calculateur part du vecteur d'état final $\{\theta\}_f$ mémorisé en effectuant le calcul de simulation, c'est-à-dire en multipliant par la matrice d'évolution $[A]_d$, puis, en additionnant le produit de la matrice d'excitation $[B]_d$ par le vecteur d'excitation $\{U\}_f$ afin de trouver, par intégration, le vecteur d'état $\{\theta\}_{f+1}$ à l'instant "$t_f$+1".

Ce calcul de simulation est ensuite réitéré autant de fois que nécessaire. Cependant, le vecteur d'excitation {U} est renouvelé à chaque itération du calcul de simulation à partir des cartographies comme expliqué. Le procédé est réitéré jusqu'à trouver le vecteur d'état initial $\{\theta\}_i$ qui n'est autre que le vecteur d'état à l'instant "$t_f$+D".

Ainsi, le calculateur simule, lors de sa réactivation, le comportement thermique de la machine électrique tournante 30 pendant la coupure pour retrouver des valeurs du vecteur d'état initial $\{\theta\}_i$ qui soient proches de la réalité.

Le calculateur est ainsi capable de résoudre le système donné par l'équation d'état "EQ10" afin de calculer la valeur du vecteur d'état que l'on aurait obtenu si le calculateur n'avait pas coupé pendant la durée de coupure en partant du vecteur d'excitation final enregistré à la coupure ainsi que du vecteur d'état final, des lois d'évolution du vecteur d'état et de la durée de coupure "D". Cette valeur du vecteur d'état est alors utilisée comme valeur initiale pour le redémarrage du modèle à la remise du contact.

Une fois cette troisième phase "P3" terminée, la première étape "E1" du procédé est enclenchée pendant la durée d'utilisation du véhicule.

On pourra limiter ce calcul à une durée très supérieure aux constantes de temps thermiques des composants de la machine électrique tournante 30, par exemple 2 heures, temps au-delà duquel les températures des composants du système pourront être prises égales à la température du moteur.

La surveillance des températures de la machine électrique tournante en temps réel pendant le fonctionnement du véhicule permet de prendre ou de faire prendre à des moyens de sécurité adéquats du véhicule des mesures de protection.

L'étape d'initialisation "Ei" permet d'améliorer grandement la précision du modèle et sa vitesse de convergence, en particulier au moment du démarrage du moteur si ce dernier, ainsi que la machine électrique tournante ne sont pas froids.

## Revendications

**1.** Procédé d'estimation en temps réel de la température d'un stator (36) et d'un rotor (38) d'une machine électrique tournante (30), notamment pour équiper un véhicule automobile, le procédé étant destiné à être mis en oeuvre par un calculateur numérique,
la machine électrique tournante (30) comportant au moins les composants suivants :

- un stator (36) fixe ;
- un rotor (38) rotatif;
- le stator (36) et/ou le rotor (38) portant au moins un bobinage (40, 44) de conducteurs électriques associé qui est destiné à être traversé par un courant électrique ;

les températures du stator ($\theta_s$) et du rotor ($\theta_r$) étant estimées par le calculateur numérique lors d'itérations du procédé par la résolution d'au moins une équation (EQ8, EQ9, EQ10), faisant intervenir

- des résistances thermiques ($R_{th-sr}$, $R_{th-exts}$) entre le stator (36) et des milieux voisins (38, $\theta_{ext}$) ;
- des résistances thermiques ($R_{th-sr}$, $R_{th-extr}$) entre le rotor (38) et des milieux voisins (36) ;
- la capacité calorifique (Cs) du stator (36) ;
- la capacité calorifique (Cr) du rotor (38) ;

**caractérisé en ce qu'**à chaque itération du procédé d'estimation, lesdites résistances thermiques ($R_{th-sr}$, $R_{th-exts}$, $R_{th-extr}$) et la capacité calorifique (Cs, Cr) de chaque élément (36, 38) sont calculées en fonction des températures du stator (36) et du rotor (38) estimées à l'itération précédente et **en ce qu'**il comporte une étape de coupure (Ef) qui est déclenchée lorsque le calculateur est désactivé, et au cours de laquelle les dernières valeurs estimées du vecteur d'état ($\{\theta\}_f$) et les dernières valeurs collectées du vecteur d'excitation ($\{U\}_f$) sont mémorisées par le calculateur avant sa désactivation complète.

2. Procédé selon la revendication précédente, **caractérisé en ce qu'**il comporte une étape (Ei) d'initialisation qui est déclenchée lors de la mise sous tension du calculateur numérique et qui comporte une première phase de comparaison d'une température de référence initiale ($\theta$ref$_i$) mesurée ou estimée à l'instant de la réactivation (t$_i$) avec une température ambiante ($\theta_{amb}$) mesurée ou estimée.

3. Procédé selon la revendication précédente, **caractérisé en ce que**, lorsque la température de référence initiale ($\theta$ref$_i$) est égale à la température ambiante ($\theta_{amb}$), les températures du vecteur d'état ($\{\theta\}_i$) et du vecteur d'excitation ($\{U\}_i$) sont toutes initialisées à la valeur de la température ambiante mesurée ($\theta_{amb}$).

4. Procédé selon la revendication 2, **caractérisé en ce qu'**une deuxième phase (P2) de détermination de la durée de coupure (D) du calculateur est enclenchée lorsque la température de référence ($\theta$ref$_i$) est supérieure à la température ambiante mesurée ($\theta_{amb}$) à l'issue de la première phase de comparaison, et au cours de laquelle la durée de coupure (D) entre la désactivation (t$_f$) et la réactivation (t$_i$) du calculateur est estimée par le calculateur en comparant la température de référence ($\theta$ref$_i$) avec la valeur finale de ladite température de référence ($\theta$ref$_f$) mémorisée avant la désactivation du calculateur.

5. Procédé selon la revendication précédente, **caractérisé en ce que** la durée de coupure (D) est déduite d'une cartographie qui est représentative de la vitesse de refroidissement de ladite variable de référence ($\theta$ref).

6. Procédé selon l'une quelconque des revendications 3 à 5, **caractérisé en ce que** lors de l'étape d'initialisation (Ei), une troisième phase (P3) de détermination des températures d'initialisation du vecteur d'état ($\{\theta\}_i$) lors de la réactivation est déclenchée à l'issue de la phase de détermination de la durée de coupure (P2), au cours de laquelle les valeurs successives des variables d'état ($\{\theta\}$) pendant la durée de coupure (D) sont recalculées pas à pas en itérant autant que nécessaire les calculs de simulation de la troisième étape d'estimation (E3) à partir des valeurs finales mémorisées des variables d'état ($\{\theta\}_f$) jusqu'à obtenir les valeurs des températures d'initialisation du vecteur d'état ($\{\theta\}_i$).

7. Procédé selon la revendication précédente, **caractérisé en ce que** lors de la troisième phase (P3) de détermination, pour chaque itération du calcul de simulation, la valeur de chaque température ($\theta_{ext}$) des variables d'excitation ($\{U\}$) est renouvelée suivant une cartographie préenregistrée dans le calculateur à partir de la dernière valeur enregistrée de ladite température ($\{U\}_f$) et de la durée de coupure (D) du calculateur.

8. Procédé selon la revendication précédente, **caractérisé en ce qu'**au cours de la troisième phase (P3), la puissance thermique ($P_{elec-s}$, $P_{elec-r}$) dissipée par le bobinage est fixée comme nulle durant les itérations du calcul de simulation.

9. Procédé selon l'une quelconque des revendications 3 à 8, **caractérisé en ce que** la température de référence ($\theta$ref) est formée par la température du moteur ($\theta$m) du véhicule automobile.

10. Procédé selon la revendication 1, **caractérisé en ce que** l'équation (EQ8, EQ9, EQ10) résolue par le calculateur numérique fait intervenir la résistance électrique ($R_{elec-s}$, $F_{elec-r}$) dudit bobinage (40, 44), et **en ce qu'**à chaque itération du procédé, ladite résistance électrique ($R_{elec-s}$, $R_{elec-r}$) est calculée en fonction de la température ($\theta_s$, $\theta_r$) de son élément porteur, stator (36) ou rotor (38), estimée à l'itération précédente.

11. Procédé selon la revendication 1, **caractérisé en ce qu'**il comporte :

   - une première étape (E1) de collecte de valeurs de variables d'excitation thermique ($\{U\}$) comportant au moins la température de l'air ($\theta_{ext}$) environnant la machine électrique tournante (30), ainsi que la puissance thermique ($P_{elec-s}$, $P_{elec-r}$) dissipée sous forme de chaleur par le passage du courant électrique dans chaque bobinage (40, 44) ;
   - une deuxième étape (E2) d'estimation des températures d'état ($\{\theta\}_t$) du stator (36) et du rotor (38), l'estimation des températures d'état ($\{\theta\}_t$) étant réalisée en résolvant le système d'équations différentielles (EQ10) suivant :

$$\frac{d}{dt}\begin{bmatrix}\theta_s \\ \theta_r\end{bmatrix} = \begin{bmatrix} -\dfrac{1}{C_s \cdot R_{th-sr}} - \dfrac{1}{C_s \cdot R_{th-exts}} & \dfrac{1}{C_s \cdot R_{th-sr}} \\[2ex] \dfrac{1}{C_r \cdot R_{th-sr}} & -\dfrac{1}{C_r \cdot R_{th-sr}} \end{bmatrix} \cdot \begin{bmatrix}\theta_s \\ \theta_r\end{bmatrix} + \begin{bmatrix} \dfrac{1}{C_s} & 0 & \dfrac{1}{C_s \cdot R_{th-exts}} \\[2ex] 0 & \dfrac{1}{C_r} & \dfrac{1}{C_r \cdot R_{th-extr}} \end{bmatrix} \cdot \begin{bmatrix} P_{\acute{e}lec-s} \\ P_{\acute{e}lec-r} \\ \theta_{ext} \end{bmatrix}$$

dans lequel :
- "$\theta_s$" représente la température du stator (36) ;
- "$\theta_r$" représente la température du rotor (38) ;
- "$\theta_{ext}$" représente la température de l'air environnant le stator (36) ;
- "$P_{elec-s}$" représente la puissance thermique dissipée par effet Joule par un bobinage (40) porté par le stator (36), cette variable étant nulle si le stator (36) ne porte pas de bobinage ;
- "$P_{elec-r}$" représente la puissance thermique dissipée par effet Joule par un bobinage (44) porté par le rotor (38), cette variable étant nulle si le rotor (38) ne porte pas de bobinage ;
- "$C_s$" représente la capacité calorifique du stator (36) ;
- "$C_r$" représente la capacité calorifique du rotor (38) ;
- "$R_{th-sr}$" représente la résistance thermique aux échanges de chaleur entre le stator (36) et le rotor (38) ;
- "$R_{th-exts}$" représente la résistance thermique aux échanges de chaleur entre le stator (36) et l'air environnant le stator (36) ;
- "$R_{th-extr}$" représente la résistance thermique aux échanges de chaleur entre le rotor (38) et l'air environnant le stator (36) ;
la résolution de ce système d'équation (EQ10) étant réalisé par une méthode numérique telle que la méthode d'Euler, à partir des températures d'état ($\{\theta\}_{t-1}$) estimées à l'itération précédente ;
- une troisième étape (E3) d'enregistrement des températures estimées ($\{\theta\}_t$) lors de l'itération en cours afin de les utiliser lors de la prochaine itération du procédé.

12. Procédé selon la revendication 1, **caractérisé en ce que** la puissance thermique ($P_{elec-s}$, $P_{elec-r}$) dissipée par chaque bobinage (40, 44) est calculée en multipliant la résistance électrique ($R_{elec-s}$, $R_{elec-r}$) dudit bobinage (40, 44) par le carré de l'intensité électrique (I) traversant ledit bobinage (40, 44), l'intensité électrique (I) étant mesurée ou estimée

13. Procédé selon l'une quelconque des revendications précédentes, **caractérisé en ce que** la machine électrique tournante (30) est un actionneur qui est destiné à commander un embrayage à friction (10) du véhicule automobile.

## Patentansprüche

1. Verfahren zur Echtzeitschätzung der Temperatur eines Stators (36) und eines Rotors (38) einer elektrischen Drehmaschine (30), insbesondere für die Ausstattung eines Kraftfahrzeugs, wobei das Verfahren dazu bestimmt ist, von einem digitalen Rechner eingesetzt zu werden,
wobei die elektrische Drehmaschine (30) mindestens die folgenden Komponenten umfasst:

- einen festen Stator (36);
- einen drehenden Rotor (38);
- wobei der Stator (36) und/oder der Rotor (38) mindestens eine zugehörige Wicklung (40, 44) von elektrischen Leitern tragen, die dazu bestimmt ist, von elektrischem Strom durchströmt zu werden;

wobei die Temperaturen des Stators ($\theta_s$) und des Rotors ($\theta_r$) vom digitalen Rechner bei Iterationen des Verfahrens durch die Lösung mindestens einer Gleichung (EQ8, EQ9, EQ10) geschätzt werden, wobei Folgendes berücksichtigt wird:

- Wärmewiderstände ($R_{th-sr}$, $R_{th-exts}$) zwischen dem Stator (36) und benachbarten Milieus (38, $\theta_{ext}$) ;
- Wärmewiderstände ($R_{th-sr}$, $R_{th-extr}$) zwischen dem Rotor (38) und benachbarten Milieus (36);
- die Wärmekapazität (Cs) des Stators (36);
- die Wärmekapazität (Cr) des Rotors (38);

**dadurch gekennzeichnet, dass** bei jeder Iteration des Schätzverfahrens die Wärmewiderstände ($R_{th-sr}$, $R_{th-exts}$,

$R_{th-extr}$) und die Wärmekapazität (Cs, Cr) jedes Elements (36, 38) in Abhängigkeit von den Temperaturen des Stators (36) und des Rotors (38), die bei der vorhergehenden Iteration geschätzt wurden, berechnet werden, und dass es einen Unterbrechungsschritt (Ef) umfasst, der ausgelöst wird, wenn der Rechner deaktiviert ist, und während dessen die letzten geschätzten Werte des Zustandsvektors ($\{\theta\}_f$) und die letzten gesammelten Werte des Erregungsvektors ($\{U\}_f$) vom Rechner vor seiner vollständigen Deaktivierung gespeichert werden.

2. Verfahren nach dem vorhergehenden Anspruch, **dadurch gekennzeichnet, dass** es einen Initialisierungsschritt (Ei) umfasst, der bei der Unterspannungsetzung des digitalen Rechners ausgelöst wird, und der eine erste Phase des Vergleichs einer Ausgangsreferenztemperatur ($\theta ref_i$), die zum Zeitpunkt der Reaktivierung ($t_i$) gemessen oder geschätzt wurde, mit einer gemessenen oder geschätzten Raumtemperatur ($\theta_{amb}$) umfasst.

3. Verfahren nach dem vorhergehenden Anspruch, **dadurch gekennzeichnet, dass**, wenn die Ausgangsreferenztemperatur ($\theta ref_i$) gleich der Raumtemperatur ($\theta_{amb}$) ist, die Temperaturen des Zustandsvektors ($\{\theta\}_f$) und des Erregungsvektors ($\{U\}_i$) auf den Wert der gemessenen Raumtemperatur ($\theta_{amb}$) initialisiert werden.

4. Verfahren nach Anspruch 2, **dadurch gekennzeichnet, dass** eine zweite Phase (P2) zur Bestimmung der Unterbrechungsdauer (D) des Rechners ausgelöst wird, wenn die Referenztemperatur ($\theta ref_i$) höher als die gemessene Raumtemperatur ($\theta_{amb}$) am Ende der ersten Vergleichsphase ist, und während der die Unterbrechungsdauer (D) zwischen der Deaktivierung ($t_f$) und der Reaktivierung ($t_i$) des Rechners durch den Rechner geschätzt wird, indem er die Referenztemperatur ($\theta ref_i$) mit dem endgültigen Wert der Referenztemperatur ($\theta ref_i$) vergleicht, der vor der Deaktivierung des Rechners gespeichert wurde.

5. Verfahren nach dem vorhergehenden Anspruch, **dadurch gekennzeichnet, dass** die Unterbrechungsdauer (D) von einer Kartografie abgeleitet wird, die für die Kühlgeschwindigkeit der Referenzvariablen ($\theta ref$) repräsentativ ist.

6. Verfahren nach einem der Ansprüche 3 bis 5, **dadurch gekennzeichnet, dass** beim Initialisierungsschritt (Ei) eine dritte Phase (P3) der Bestimmung der Initialisierungstemperaturen des Zustandsvektors ($\{\theta\}_i$) bei der Reaktivierung am Ende der Phase der Bestimmung der Unterbrechungsdauer (P2) ausgelöst wird, während der die aufeinanderfolgenden Werte der Zustandsvariablen ($\{\theta\}$) während der Unterbrechungsdauer (D) schrittweise neu berechnet werden, indem soweit notwendig die Simulationsberechnungen des dritten Schätzschrittes (E3) aus gespeicherten Endwerten der Zustandsvariablen ($\{\theta\}_f$) iteriert werden, bis die Werte der Initialisierungstemperaturen des Zustandsvektors ($\{\theta\}_i$) erhalten werden.

7. Verfahren nach dem vorhergehenden Anspruch, **dadurch gekennzeichnet, dass** bei der dritten Bestimmungsphase (P3) für jede Iteration der Simulationsberechnung der Wert jeder Temperatur ($\theta_{ext}$) der Erregungsvariablen ($\{U\}$) nach einer im Rechner voraufgezeichneten Kartografie aus dem letzten aufgezeichneten Wert der Temperatur ($\{U\}_f$) und der Unterbrechungsdauer (D) des Rechners erneuert wird.

8. Verfahren nach dem vorhergehenden Anspruch, **dadurch gekennzeichnet, dass** während der dritten Phase (P3) die Wärmeleistung ($P_{elec-s}$, $P_{elec-r}$), die von der Wicklung abgegeben wird, während der Iterationen der Simulationsberechnung als Null festgesetzt wird.

9. Verfahren nach einem der Ansprüche 3 bis 8, **dadurch gekennzeichnet, dass** die Referenztemperatur ($\theta ref$) von der Temperatur des Motors ($\theta m$) des Kraftfahrzeugs gebildet ist.

10. Verfahren nach Anspruch 1, **dadurch gekennzeichnet, dass** die Gleichung (EQ8, EQ9, EQ10), die vom digitalen Rechner gelöst wird, den elektrischen Widerstand ($R_{elec-s}$, $R_{elec-r}$) der Wicklung (40, 44) berücksichtigt, und dass bei jeder Iteration des Verfahrens der elektrische Widerstand ($R_{elec-s}$, $R_{elec-r}$) in Abhängigkeit von der Temperatur ($\theta_s$, $\theta_r$) seines Tragelements, Stators (36) oder Rotors (38), die bei der vorhergehenden Iteration geschätzt wurde, berechnet wird.

11. Verfahren nach Anspruch 1, **dadurch gekennzeichnet, dass** es umfasst:

- einen ersten Schritt (E1) des Sammelns von Werten von Wärmeerregungsvariablen ($\{U\}$), umfassend mindestens die Temperatur der Luft ($\theta_{ext}$), die die elektrische Drehmaschine (30) umgibt, sowie die Wärmeleistung ($P_{elec-s}$, $P_{elec-r}$), die in Form von Wärme durch das Strömen des elektrischen Stroms durch jede Wicklung (40, 44) abgegeben wird,
- einen zweiten Schritt (E2) der Schätzung der Zustandstemperaturen ($\{\theta\}_t$) des Stators (36) und des Rotors (38), wobei die Schätzung der Zustandstemperaturen ($\{\theta\}_t$) erfolgt, indem das folgende System von Differentialgleichungen (EQ10) gelöst wird:

$$\frac{d}{dt}\begin{bmatrix}\theta_s\\\theta_r\end{bmatrix}=\begin{bmatrix}-\dfrac{1}{C_s\cdot R_{th-sr}}-\dfrac{1}{C_s\cdot R_{th-exts}} & \dfrac{1}{C_s\cdot R_{th-sr}}\\[2mm] \dfrac{1}{C_r\cdot R_{th-sr}} & -\dfrac{1}{C_r\cdot R_{th-sr}}\end{bmatrix}\cdot\begin{bmatrix}\theta_s\\\theta_r\end{bmatrix}+\begin{bmatrix}\dfrac{1}{C_s} & 0 & \dfrac{1}{C_s\cdot R_{th-exts}}\\[2mm] 0 & \dfrac{1}{C_r} & \dfrac{1}{C_r\cdot R_{th-extr}}\end{bmatrix}\cdot\begin{bmatrix}P_{élec-s}\\P_{élec-r}\\\theta_{ext}\end{bmatrix}$$

wobei:
- "$\theta_s$" die Temperatur des Stators (36) darstellt;
- "$\theta_r$" die Temperatur des Rotors (38) darstellt;
- "$\theta_{ext}$" die Temperatur der den Stator (36) umgebenden Luft darstellt;
- "$P_{elec-s}$" die Wärmeleistung darstellt, die durch Joule-Effekt von einer Wicklung (40), die vom Stator (36) getragen wird, abgegeben wird, wobei diese Variable gleich Null ist, wenn der Stator (36) keine Wicklung trägt;
- "$P_{elec-r}$" die Wärmeleistung darstellt, die durch Joule-Effekt von einer Wicklung (44), die vom Rotor (38) getragen wird, abgegeben wird, wobei diese Variable gleich Null ist, wenn der Rotor (38) keine Wicklung trägt;
- "$C_s$" die Wärmekapazität des Stators (36) darstellt;
- "$C_r$" die Wärmekapazität des Rotors (38) darstellt;
- "$R_{th-sr}$" den thermischen Widerstand gegen Wärmeaustausch zwischen dem Stator (36) und dem Rotor (38) darstellt;
- "$R_{th-exts}$" den thermischen Widerstand gegen Wärmeaustausch zwischen dem Stator (36) und der den Stator (36) umgebenden Luft darstellt;
- "$R_{th-extr}$" den thermischen Widerstand gegen Wärmeaustausch zwischen dem Rotor (38) und der den Stator (36) umgebenden Luft darstellt;

wobei die Lösung dieses Gleichungssystems (EQ10) durch eine digitale Methode wie die Eulersche Methode aus Zustandstemperaturen ($\{\theta\}_{t-1}$) erfolgt, die bei der vorhergehenden Iteration geschätzt wurden:
- einen dritten Schritt (E3) der Aufzeichnung der geschätzten Temperaturen ($\{\theta\}_t$) bei der laufenden Iteration, um sie bei der nächsten Iteration des Verfahrens zu verwenden.

12. Verfahren nach Anspruch 1, **dadurch gekennzeichnet, dass** die Wärmeleistung ($P_{elec-s}$, $P_{elec-r}$), die von jeder Wicklung (40, 44) abgegeben wird, berechnet wird, indem der elektrische Widerstand ($R_{elec-s}$, $R_{elec-r}$) der Wicklung (40, 44) mit dem Quadrat der Stromstärke (I), die durch die Wicklung (40, 44) strömt, multipliziert wird, wobei die Stromstärke (I) gemessen oder geschätzt wird.

13. Verfahren nach einem der vorhergehenden Ansprüche, **dadurch gekennzeichnet, dass** die elektrische Drehmaschine (30) ein Aktuator ist, der dazu bestimmt ist, eine Reibungskupplung (10) des Kraftfahrzeugs steuern.

**Claims**

1. Method for estimating in real time the temperature of a stator (36) and of a rotor (38) of a rotating electrical machine (30), notably to equip a motor vehicle, the method being intended to be implemented by a digital computer, the rotating electrical machine (30) comprising at least the following components:

    - a fixed stator (36);
    - a rotating rotor (38);
    - the stator (36) and/or the rotor (38) bearing at least one winding (40, 44) of associated electrical conductors which is intended to be passed through by an electric current;

the temperatures of the stator ($\theta_s$) and of the rotor ($\theta_r$) being estimated by the digital computer in iterations of the method by the solving of at least one equation (EQ8, EQ9, EQ10), involving

    - thermal resistances ($R_{th-sr}$, $R_{th-exts}$) between the stator (36) and adjacent media (38, $\theta_{ext}$) ;
    - thermal resistances ($R_{th-sr}$, $R_{th-extr}$) between the rotor (38) and adjacent media (36);
    - the heat capacity (Cs) of the stator (36);
    - the heat capacity (Cr) of the rotor (38);

**characterized in that**, on each iteration of the estimation method, said thermal resistances ($R_{th-sr}$, $R_{th-exts}$, $R_{th-extr}$) and the heat capacity ($C_s$, $C_r$) of each element (36, 38) are calculated as a function of the temperatures of the stator (36) and of the rotor (38) estimated on the preceding iteration and **in that** it comprises a cutoff step (Ef) which is triggered when the computer is deactivated, and during which the latest estimated values of the state vector ($\{\theta\}_f$) and the latest collected values of the excitation vector ($\{\theta\}_f$) are stored by the computer before its complete deactivation.

2. Method according to the preceding claim, **characterized in that** it comprises a step (Ei) of initialization which is triggered when the digital computer is powered up and which comprises a first phase of comparison of an initial reference temperature ($\theta ref_i$) measured or estimated at the moment of reactivation ($t_i$) with a measured or estimated ambient temperature ($\theta_{amb}$).

3. Method according to the preceding claim, **characterized in that**, when the initial reference temperature ($\theta ref_i$) is equal to the ambient temperature ($\theta_{amb}$), the temperatures of the state vector ($\{\theta\}_i$) and of the excitation vector ($\{U\}_i$) are all initialized with the value of the measured ambient temperature ($\theta_{amb}$).

4. Method according to Claim 2, **characterized in that** a second phase (P2) of determination of the cutoff duration (D) of the computer is engaged when the reference temperature ($\theta ref_i$) is higher than the measured ambient temperature ($\theta_{amb}$) at the end of the first comparison phase, and during which the cutoff duration (D) between the deactivation ($t_f$) and the reactivation ($t_i$) of the computer is estimated by the computer by comparing the reference temperature ($\theta ref_i$) with the final value of said reference temperature ($\theta ref_i$) stored before the deactivation of the computer.

5. Method according to the preceding claim, **characterized in that** the cutoff duration (D) is deduced from a mapping which is representative of the rate of cooling of said reference variable ($\theta ref$).

6. Method according to any one of Claims 3 to 5, **characterized in that**, in the initialization step (Ei), a third phase (P3) of determination of the initialization temperatures of the state vector ($\{\theta\}_i$) upon the reactivation is triggered at the end of the phase of determination of the cutoff duration (P2), during which the successive values of the state variables ($\{\theta\}$) during the cutoff duration (D) are recalculated step by step by iterating, as many times as necessary, the simulation calculations of the third estimation step (E3) based on the stored final values of the state variables ($\{\theta\}_f$) until the values of the initialization temperatures of the state vector ($\{\theta\}_i$) are obtained.

7. Method according to the preceding claim, **characterized in that**, in the third determination phase (P3), for each iteration of the simulation calculation, the value of each temperature ($\theta_{ext}$) of the excitation variables ($\{U\}$) is renewed according to a mapping prerecorded in the computer based on the last recorded value of said temperature ($\{U\}_f$) and on the cutoff duration (D) of the computer.

8. Method according to the preceding claim, **characterized in that**, during the third phase (P3), the thermal power ($P_{elec-s}$, $P_{elec-r}$) dissipated by the winding is set as zero during the iterations of the simulation calculation.

9. Method according to any one of Claims 3 to 8, **characterized in that** the reference temperature ($\theta ref$) is formed by the temperature of the engine ($\theta m$) of the motor vehicle.

10. Method according to Claim 1, **characterized in that** the equation (EQ8, EQ9, EQ10) solved by the digital computer involves the electrical resistance ($R_{elec-s}$, $R_{elec-r}$) of said winding (40, 44), and **in that**, on each iteration of the method, said electrical resistance ($R_{elec-s}$, $R_{elec-r}$) is calculated as a function of the temperature ($\theta_s$, $\theta_r$) of its supporting element, stator (36) or rotor (38), estimated on the preceding iteration.

11. Method according to Claim 1, **characterized in that** it comprises:

- a first step (E1) of collection of values of thermal excitation variables ($\{U\}$) comprising at least the temperature of the air ($\theta_{ext}$) surrounding the rotating electrical machine (30), and the thermal power ($P_{elec-s}$, $P_{elec-r}$) dissipated in the form of heat by the passage of the electric current in each winding (40, 44);
- a second step (E2) of estimation of the state temperatures ($\{\theta\}_t$) of the stator (36) and of the rotor (38), the estimation of the state temperatures ($\{\theta\}_t$) being performed by solving the following system of differential equations (EQ10) :

$$\frac{d}{dt}\begin{bmatrix} \theta_s \\ \theta_r \end{bmatrix} = \begin{bmatrix} -\dfrac{1}{C_s \cdot R_{th-sr}} - \dfrac{1}{C_s \cdot R_{th-exts}} & \dfrac{1}{C_s \cdot R_{th-sr}} \\ \dfrac{1}{C_r \cdot R_{th-sr}} & -\dfrac{1}{C_r \cdot R_{th-sr}} \end{bmatrix} \cdot \begin{bmatrix} \theta_s \\ \theta_r \end{bmatrix} + \begin{bmatrix} \dfrac{1}{C_s} & 0 & \dfrac{1}{C_s \cdot R_{th-exts}} \\ 0 & \dfrac{1}{C_r} & \dfrac{1}{C_r \cdot R_{th-extr}} \end{bmatrix} \cdot \begin{bmatrix} P_{élec-s} \\ P_{élec-r} \\ \theta_{ext} \end{bmatrix}$$

in which:

- "$\theta_s$" represents the temperature of the stator (36) ;
- "$\theta_r$" represents the temperature of the rotor (38) ;
- "$\theta_{ext}$" represents the temperature of the air surrounding the stator (36);
- "$P_{elec-s}$" represents the thermal power dissipated by the Joule effect by a winding (40) borne by the stator (36), this variable being zero if the stator (36) bears no winding;
- "$P_{elec-r}$" represents the thermal power dissipated by the Joule effect by a winding (44) borne by the rotor (38), this variable being zero if the rotor (38) bears no winding;
- "$C_s$" represents the heat capacity of the stator (36) ;
- "$C_r$" represents the heat capacity of the rotor (38) ;
- "$R_{th-sr}$" represents the thermal resistance to the heat exchanges between the stator (36) and the rotor (38);
- "$R_{th-exts}$" represents the thermal resistance to the heat exchanges between the stator (36) and the air surrounding the stator (36);
- "$R_{th-extr}$" represents the thermal resistance to the heat exchanges between the rotor (38) and the air surrounding the stator (36);

the solving of this equation system (EQ10) being performed by a digital method such as the Euler method, based on the state temperatures ($\{\theta\}_{t-1}$) estimated on the preceding iteration;
- a third step (E3) of recording of the temperatures ($\{\theta\}_t$) estimated in the current iteration in order to use them in the next iteration of the method.

12. Method according to Claim 1, **characterized in that** the thermal power ($P_{elec-s}$, $P_{elec-r}$) dissipated by each winding (40, 44) is calculated by multiplying the electrical resistance ($R_{elec-s}$, $R_{elec-r}$) of said winding (40, 44) by the square of the electric current (I) passing through said winding (40, 44), the electric current (I) being measured or estimated.

13. Method according to any one of the preceding claims, **characterized in that** the rotating electrical machine (30) is an actuator which is intended to control a friction clutch (10) of the motor vehicle.

**Fig. 1**

**Fig. 2**

**Fig. 3**

**Fig. 4**

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2721264 A1
- FR 2526599 A1
- US 20060250154 A
- FR 2896354 A